# EUROPEAN PATENT SPECIFICATION

(11) **EP 0 601 194 B1**
(45) Date of publication and mention of the grant of the patent: **22.03.2000**
(21) Application number: 93910347.9
(22) Date of filing: 18.05.1993
(51) Int. Cl.: A23P 1/12, A23G 3/22, A21C 9/06, A21C 11/16, B26D 1/45, B26D 1/30

(54) **METHOD AND APPARATUS FOR PRODUCING PLASTIC FOODS**
VERFAHREN UND VORRICHTUNG ZUR HERSTELLUNG VON PLASTISCHEN NAHRUNGSMITTELN
PROCEDE ET APPAREIL DE PRODUCTION D'ALIMENTS PLASTIQUES

(30) Priority: 26.05.1992 JP 13320892; 15.12.1992 JP 33477392; 25.01.1993 JP 1025093
(43) Date of publication of application: 15.06.1994
(73) Proprietor: KOBIRD CO., Ltd., Fukui-shi, Fukui 910 (JP)
(72) Inventor: KOBAYASHI, Masao, Fukui-shi, Fukui 910 (JP)
(74) Representative: Pearce, Anthony Richmond
(86) International application number: JP9300644
(87) International publication number: WO9324025

(56) References cited:
- EP-A- 0 230 368
- EP-A- 0 280 484
- EP-A- 0 430 396
- EP-A- 0 553 958
- JP-A- 1 142 682
- JP-A- 1 247 073
- US-A- 4 251 201
- US-A- 4 469 475
- US-A- 4 859 165

## Description

### TECHNICAL FIELD

The present invention relates to a method and an apparatus for producing a plastic food, in which a series of forming steps can be processed automatically and highly efficiently. The steps include, if necessary, forming stripe patterns on various continuously extruded bar-shaped plastic food such as one with core and skin made of more than two kinds of materials, forming and cutting the various bar-shaped foods into desired shapes.

### BACKGROUND ART

For various plastic foods such as cake or confectionery, it is important to please customers through not only the taste but the appearance such as shapes, colours or patterns. In the past, however, there was no apparatus or method to perform mechanically continuous operations which include a delicate forming of the plastic foods, or a fine colouring or patterning on the plastic foods. Thus, such works have been done by hand, which is time-consuming and also very insanitary due to contamination or propagation of germs.

Of course, the following method is known for extruding a plastic food material continuously and cutting this bar-shaped plastic food. That is, several shutters are provided on a polygonal circumference, and while the food material is extruded to an area enclosed with these shutters, the shutters are slid to close, thereby, the food material is squeezed and cut at a desired position (Japanese Utility Model Publication No 29433 of 1988, and Japanese Patent Publication No 42652 of 1989, equivalent to EP-A-0230368).

EP-A-0430396 discloses an apparatus having pivotally mounted blades for cutting and shaping a spherical body, for use in extruders, such as that described in EP-A-0230368.

In the above method, however, the object of the method was to make sure that the continuously extruded bar-shaped food is cut properly, and reliably, the main feature was a cut and wrap mechanism to cut beautifully at a given position the bar-shaped food with core and skin consisting of two or more types of material without the core material being exposed on the surface. Therefore, the shape of the food produced has been limited to a spherical or rounded cylindrical shape even though the efficiency for producing the food product has improved remarkably.

US Patent No. 4251201 discloses an extrusion device for intermittently supplying a food filling material and a coating material through an inner and outer conduit respectively, so that the filling material is coated by the coating material. An iris valve opens and closes to produce a spherical or cylindrical product. US Patent No. 4469475 discloses a similar device, modified for continuous extrusion, in which products having strings of filled areas can be produced. Continuous extrusion is achieved by providing the inner conduit with a hinged flexible sleeve which is closed by the back pressure of the coating material when the iris valve is closed, and a back-pressure relief valve. Strings of filled areas can be produced by repeated partial closing and opening of the iris valve.

EP-A-0280484 discloses an apparatus for producing globular filled food products by non-continuous extrusion. The downwardly extruded material is received by a raised part of the upper run of a belt conveyor and is cut by pivotally mounted overlapping plates.

US Patent No. 4859165 discloses an extruder head which allows a spiral or other pattern to be applied to the outer surface of an extruded food material.

EP-A-0553958 (falling under Art 54(3) EPC) discloses a cutter apparatus comprising a plurality of circumferentially mounted pivotal shutter elements. A bar-shaped food material is extruded continuously and cut in a throttle area into spherical pieces which are received by a vertically moveable feed table which moves in synchronisation with the throttle area.

It is, therefore, an object of the present invention to provide a method and apparatus capable of forming a food product having various shapes using continuously extruded bar-shaped food.

According to one aspect of the present invention there is provided a method for forming a plastic food having at least one constriction therein, comprising the steps of:
(a) continuously extruding a plastic bar-shaped food material from a nozzle downwardly onto a belt conveyor;
(b) causing said belt conveyer with said bar-shaped food material thereon to move upwardly and downwardly during extrusion of the latter;
(c) forming at least one constriction having the required shape in the surface of the bar-shaped food material introduced into a forming and cutting area interposed between said nozzle and conveyor, by reducing, but not closing, and then opening said forming and cutting area with pivotally mounted multiple shutters driven by a control motor capable of controlling the direction, angle, starting and stopping times of pivotal movement of the shutters;
(d) cutting said bar-shaped food material in said forming and cutting area by closing said forming and cutting area completely by means of said shutters; and
(e) moving the forming and cutting area upwardly and downwardly during extrusion of the bar-shaped food material.

During the extruding step, one or more types of stripe pattern consisting of plastic food materials may be formed on the inside and/or on the surface of the bar-shaped food material extruded.

In a first embodiment, at least three or more shutters having a shutting contact edge at one end of the shutter and a cutter blade extending toward a pivot axis from the contact edge are pivotally arranged with the contact edge of each shutter contacting the cutter blade of an adjacent shutter thereby to form the forming and cutting area.

In a second embodiment, at least two or more shutters having a cutter hole in contact with the bar-shaped food material are pivotally overlapped in a contacting condition, thereby to form the forming and cutting area.

According to a second aspect of the present invention, there is provided an apparatus adapted and constructed for performing the method of claim 1, said apparatus comprising;
(a) extruding means including a downwardly directed nozzle for continuously extruding a plastic bar-shaped food material;
(b) a belt conveyor arranged below said extruding means;
(c) means for moving the belt conveyor upwardly and downwardly between upper and lower positions;
(d) forming and cutting means arranged about a forming and cutting area interposed between said nozzle and belt conveyor, said forming and cutting means comprising symmetrically and pivotally supported multiple shutters reciprocally pivotable between (i) an open position in which the bar-shaped food material can pass therethrough, (ii) a partially closed position in which a restriction is formed in the bar-shaped food material, and (iii) a closed position in which bar-shaped food is cut off from the bar-shaped food material;
(e) control means including a control motor for controlling the direction, angle, and starting and stopping times of pivotal movement of the shutters; and
(f) means for moving the forming and cutting area upwardly and downwardly during extrusion.

In a first embodiment, the forming and cutting means includes at least three or more shutters having a contact edge in a shutting position at the top of shutter and a cutter blade extending toward a pivot axis from the contact edge, the shutters being pivotally arranged with the contact edge of each shutter contacting the cutter blade of an adjacent shutter, thereby to form the forming and cutting area.

In a second embodiment, the forming and cutting means includes at least two or more shutters having a cutter hole in contact with the bar-shaped food, the shutters being pivotally overlapped in a contacting condition, thereby to form the forming and cutting area.

Preferably, the extruding means comprises a large nozzle for extruding a first plastic food material and a small nozzle mounted with clearance inside the large nozzle for extruding a second plastic food material, thereby to produce a bar-shaped food having a core of said second food material and a skin of said first food material.

The extruding means may include a nozzle device for a stripe pattern having at least one nozzle hole for extruding a linear food material toward the bar-shaped food material, the nozzle device being located adjacent an outlet of the large nozzle either inside or outside said large nozzle so that said linear food material is extruded inside or outside the bar-shaped food material.

The large nozzle for extruding the bar-shaped food material may be rotatably mounted and the nozzle device for a stripe pattern may be fixed against rotation.

According to the present invention, human skills are not required, and still it is possible to freely design various shapes of the plastic food. Furthermore, it becomes possible to reproduce creatively designed food with identical shapes efficiently and continuously in large quantity.

### DISCLOSURE OF THE INVENTION

The present invention discloses a method and apparatus for forming a plastic food. According to the apparatus of the present invention, various bar-shaped foods such as a bar-shaped food with core and skin made of more than two types of material extruded from a unit having a set of nozzles is introduced into a forming and cutting area enclosed with multiple shutters. Then, constrictions having required shape are formed on the peripheral surface of the introduced bar-shaped food by moving the shutters to narrow and widen the area accordingly as required. Then the bar-shaped food with the formed constrictions is cut by shutting the area completely to obtain the plastic food products with various shapes. If necessary, also, the stripe pattern can be added on to the bar-shaped food by attaching a linear food material which is extruded from a nozzle device for the stripe pattern mounted on an outlet of the nozzle unit to the bar-shaped food extruded from the nozzle unit.

### BRIEF DESCRIPTION OF THE DRAWINGS

Figure 1 is a diagrammatic elevational view of an apparatus in its entirety, according to a first embodiment of the present invention,
Figure 2 is a sectional explanatory illustration showing a lower part of the bar-shaped food supply unit according to the first embodiment,
Figure 3 is a perspective explanatory view showing a nozzle device by which a stripe pattern is added on, according to the first embodiment,
Figure 4 to Figure 6 are explanatory views showing a forming and cutting area according to the first embodiment,
Figure 7 to Figure 13 are explanatory views of forming steps showing concrete examples of the method of the present invention according to the first embodiment,
Figure 14 is a perspective view showing a formed food with stripe pattern obtained by the concrete example of the method of the present invention,
Figure 15 to Figure 20 are side views showing the shape of the formed food obtained by the present invention,
Figure 21 is a sectional explanatory illustration showing a lower part of bar-shaped food supply unit according to a second embodiment of the present invention,
Figures 22 and 23 are explanatory views showing a forming and cutting area according to the second embodiment.
Figure 24 is a sectional explanatory illustration showing a bar-shaped food supply unit according to a third embodiment of the present invention, and

### BEST MODE FOR CARRYING OUT THE INVENTION

An apparatus for forming a plastic food according to the present invention comprises a bar-shaped food supply unit (A) and a food forming unit (B). The bar-shaped food supply unit (A) is for continuously extruding a bar-shaped food with core and skin made of two or more types of material while adding a stripe pattern on or inside the food. A food forming unit (B) is for introducing the extruded bar-shaped food into a forming and cutting area and forming and cutting the food to the required shape. The present invention will be described in further detail by way of three embodiments below.

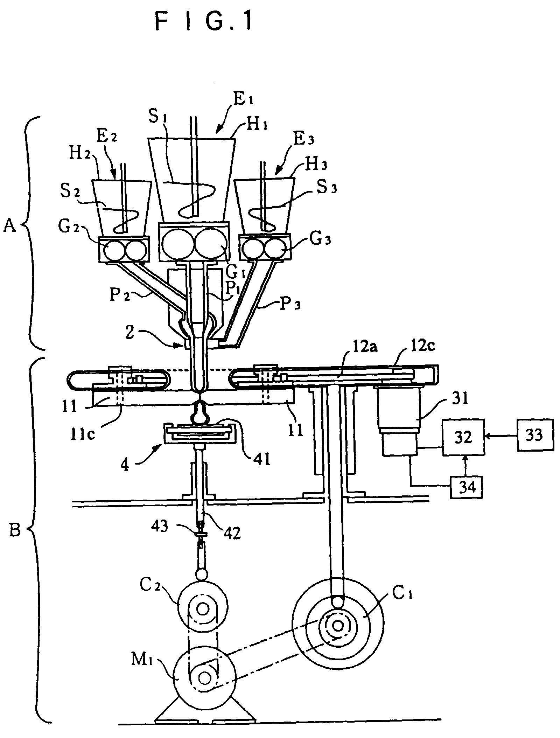

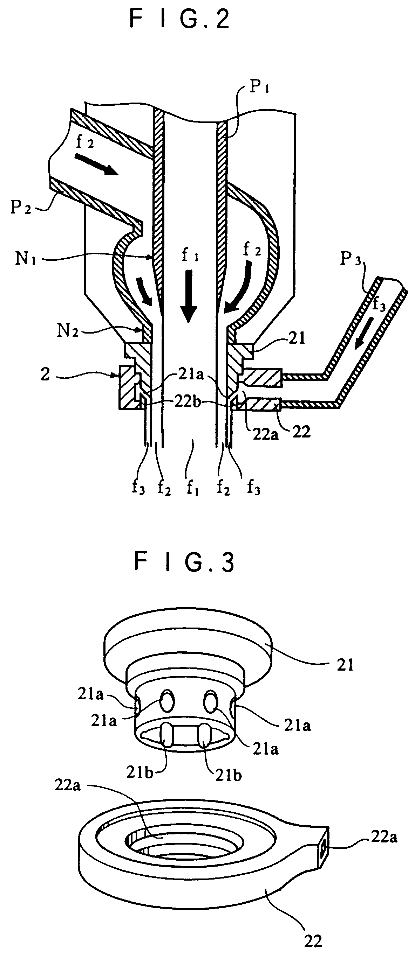

Referring first to Figure 1 to Figure 3, there is shown the bar-shaped food supply unit (A) according to a first embodiment. In the drawing, arrows (E1 to E3) indicate extruders with built-in gear pumps (G1 to G3) and helical flights (S1 to S3). A first food material (f1: soft ice cream), a second food material (f2: white soft and sticky rice cake), and a third food material (f3: red soft and sticky rice cake) disposed in hoppers (H1 to H3) are each pumped under pressure into respective supply passages (P1 to P3). A small nozzle (N1) and a large nozzle (N2) are provided on the respective ends of the supply passages (P1 and P2) for extruding the first and second food materials (f1, f2), and the small nozzle (N1) is mounted with clearance in the large nozzle (N2).

By the above structure, a bar-shaped food with the second food material (f2) wrapping the first food material (f1) is extruded continuously. Then, the third food material (f3) is extruded in lines and attached to the surface of the bar-shaped food with core and skin, forming a stripe pattern on the surface.

A nozzle device (2) for the stripe pattern by which the third food material (f3) is extruded in multiple lines is mounted on an outlet of the large nozzle (N2). The nozzle device (2) has a structure so that a first cylindrical part (21) having nozzle holes (21a, 21a, . . .) is inserted into a second cylindrical part (22). There is a gap forming an annular clearance between the outer surface of the first cylindrical part (21) and the inner surface of the second cylindrical part (22). The annular clearance created by the gap serves as a passage (22a) from which the third food material (f3) is introduced into the nozzle device (2) from the outside. Also, grooves (21b, 21b, . . .) of semi-circular shape in cross-section are bored on the inner surface of the first cylindrical part (21) toward the nozzle outlet from the nozzle holes (21a, 21a, . . .).

By the above structure, the third food material (f3) is supplied under pressure into the inside of the nozzle device (2) from the supply passage (P3) through the passage (22a), and is extruded into a cylindrical part of the nozzle device (2) from the nozzle hole (21a) along the grooves (21b). Thus, the third food material (f3) having line patterns is attached to the surface of the bar-shaped food with core and skin, and the stripe pattern is formed.

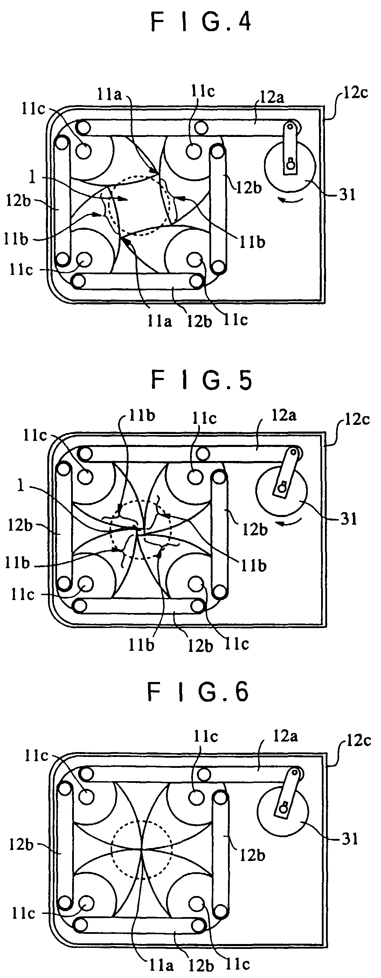

Next, referring to Figure 4 to Figure 6 as well as Figure 1, there is shown the food forming unit (B) according to the first embodiment. In the drawing, arrow (1) indicates the forming and cutting area for forming and cutting the extruded bar-shaped food having the stripe pattern. The forming and cutting area (1) is enclosed with four shutters (11, 11, 11, 11) having the same shape, the shutters being symmetrically arranged so as to be pivoted at each corner of a virtual square. Each shutter (11), resembling the shape of a candle flame, has a rounded isosceles triangle shape with a pointed apex, and is pivoted at a pivot axis (11c) that is at the centre of a circular arc forming the base of the isosceles triangle. The vertex of the isosceles triangle farthest from the pivot axis (11c) forms a shutting contact edge (11a), and one of the two equal sides of the isosceles triangle having a circular arc shape forms a cutter blade (11b).

Also, the shutters (11) are arranged so that the shutting contact edge (11a) of each shutter is made to contact the cutter blade (11b) of an adjacent shutter, and the forming and cutting area (1) is formed by each cutter blade (11b) inside the area surrounded by shutters (11, 11, 11, 11).

Each shutter (11) is pivotally joined by a long link part (12a) and three short link parts (12b) having the same shape, one end of the long link part (12a) being joined to a control motor (31). When the control motor (31) is driven, the link parts (12a, 12b) are moved accordingly, and the four shutters (11, 11, 11, 11) pivot synchronously with the contact edge (11a) contacting the cutter blade (11b). The long and short link parts (12a, 12b) are covered with a link part cover (12c). While protecting the link parts thus, the link parts are separated from the food material for sanitary reasons.

Further, a motor controller (32), a setting unit (33), and a detector (34) are provided on the control motor (31) in order to open and shut the forming and cutting the area (1) accurately (see Figure 1). By inputting setting values such as direction, angle and rotational speed of the control motor (31) to the setting unit (33), the motor controller (32) compares a signal from the detector (34) which detects the angle of a rotary shaft of the control motor (31) with a signal from the setting unit (33), and the control motor (31) is controlled accordingly. By inputting the selling values, therefore, the timing, degree, and speed of opening and shutting of the area (1) can each be set freely as desired. Thus, the bar-shaped food having a stripe pattern, as it descends vertically into the area (1), can be shaped by pressing and constricting intentionally at a desired position. Thus, a bar-shaped food having various shapes can be obtained. The constricted and deformed bar-shaped food is cut by completely shutting the area (1), and the cut food is carried to a given position (toward the rear of the apparatus) by a belt conveyor (4) located below and which operates intermittently.

Moreover, the forming and cutting area (1) and the belt conveyor (4) are each designed to perform suitable up-and-down motion by first and second cams (C1 and C2) interlocked with a motor (M1). By using this up-and-down motion, when forming the food, the descending speeds of the bar-shaped food and the forming and cutting area (1) are synchronized. Also, at the time of cutting, the belt conveyor (4) is elevated so that the bar-shaped food is supported from below in order to prevent the bar-shaped food from being torn off by dead weight and exposing the material with core and skin. Also, by adjusting the elevating timing or speed of the belt conveyor (4) as desired, the bar-shaped food can be formed in a still greater variety of shapes (as described later). An elevating rod (42) supporting the belt conveyor (4) has an adjusting bolt mechanism, and by an adjusting dial (43) of the adjusting bolt mechanism, the position of the belt conveyor (4) can be adjusted according to the height of the formed food.

In this embodiment, the forming and cutting area (1) is formed with the contact edge (11a) contacting the cutter blade (11b) forming a contact line rather than a contact plane with the adjacent shutter. Thus, the load for the other mechanisms such as the control motor (31) is reduced since the contact resistance is small when opening and shutting the area (1). Further, there is an additional effect that the food is not prone to clogging inside the forming and cutting area (1) since the contact edge (11a) cleans the plastic food adhering to the cutter side (11b) at each opening and shutting of the area (1).

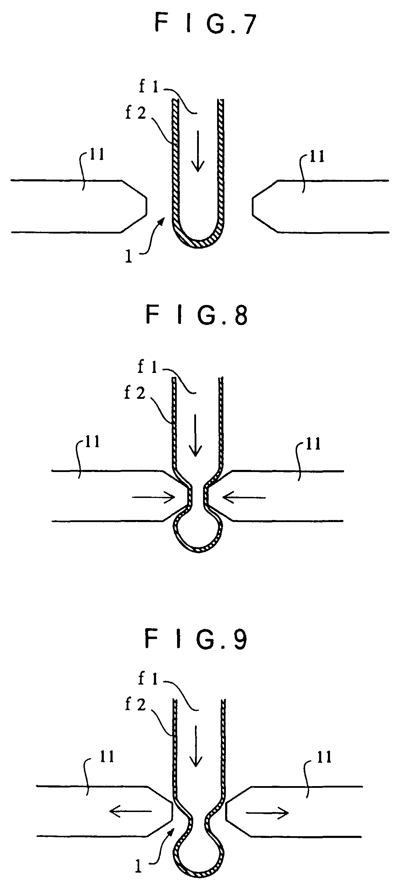

Next, referring to Figure 7 to Figure 14, there is shown a step of continuously forming and cutting the bar-shaped food with core and skin in the area (1) according to the first embodiment.

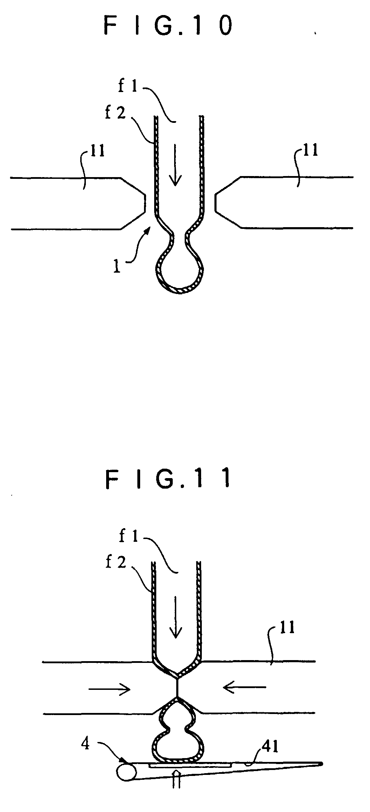

The bar-shaped food with core and skin (core material: first food material f1, skin material: second food material f2) having a stripe pattern (third food material f3: not shown in Figure 7 to Figure 13) is continuously extruded into the forming and cutting area (1) enclosed with the shutters (11, 11, 11, 11) (see Figure 7). When the bar-shaped food is extruded to the required position, the shutters (11) pivot through the required angle and then the area (1) reduces by the required amount, thereby the surface of the bar-shaped food is squeezed (see Figure 8). Immediately after this, the shutters (11) pivot back and the area (1) opens. Thus, a constriction is formed around the surface of the bar-shaped food (see Figure 9). When the bar-shaped food is further extruded, the shutters (11) pivot until the area (1) is completely closed, and thereby the bar-shaped food is cut. Accordingly, a gourd-shaped food having a constriction at a slightly upper middle portion is formed (see Figures 10 and 11).

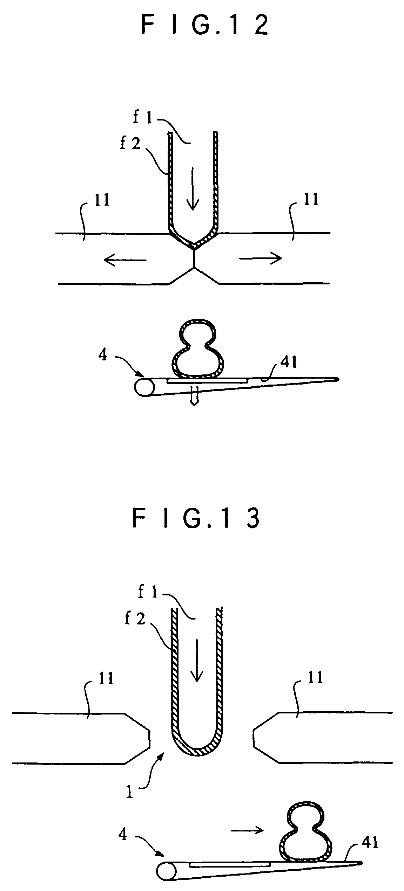

During the cutting step, the belt conveyor (4), adjusted at a predetermined level by the adjusting dial (43), is elevated in order to support the bar-shaped food, and immediately after cutting, the conveyor (4) descends with the gourd-shaped food on it. Then, a belt (41) operating intermittently carries the gourd-shaped food (see Figures 12 and 13).

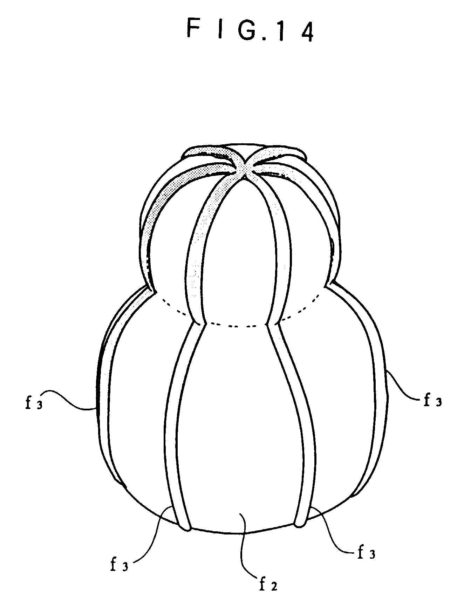

By repeating the above forming and cutting step, gourd-shaped foods with core and skin (core material: first food material f1: soft ice cream, skin material: second food material f2: soft and sticky white rice cake) having a stripe pattern (third food material f3: soft and sticky red rice cake) are produced continuously (see Figure 14).

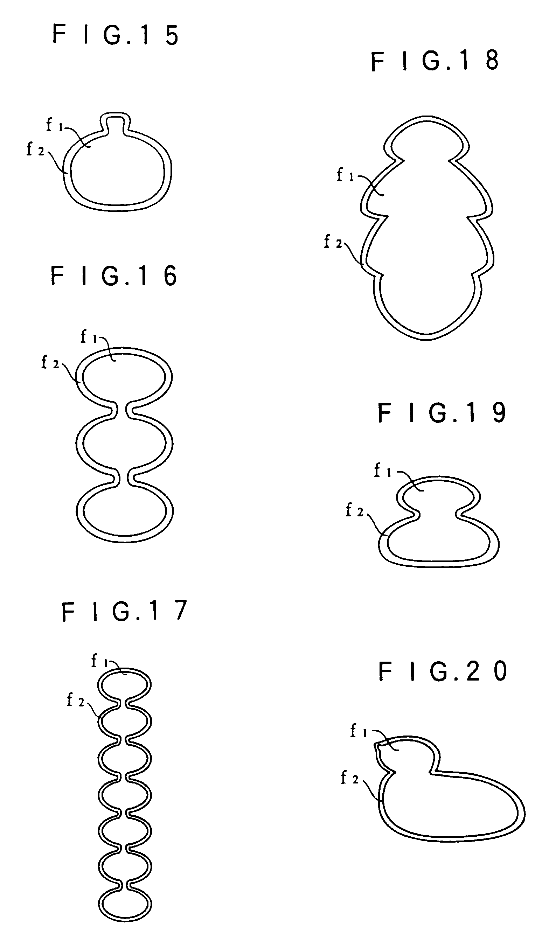

The described embodiment provides the producing step for gourd-shaped food as an example, yet the formed food product made by the apparatus of the present invention is not limited to a gourd shape, but products of a variety of shapes can be produced. Such varieties are shown below (see Figure 15 to Figure 20).

For example, by changing the position of constriction on the extruded bar-shaped food, the ratio of the sizes of the top and bottom portions of the gourd shape can be easily varied (see Figure 15). Further, forming multiple constrictions allows a food product having a pitted dumpling shape to be formed (see Figures 16 and 17). Also, during the step of forming the constriction (see Figures 8 and 9), if the shutter is kept partially shut while the food continues to extrude, the part above the constriction becomes large in diameter. A repetition of this step several times allow a pine cone shaped to be obtained (see Figure 18). Again, if during the cutting step of the gourd-shaped food (see Figure 11), the conveyor (4) is elevated beyond supporting the food being cut, it allows the gourd-shaped food to be vertically pressed and thereby a food having a double disk shape can be produced (see Figure 19).

Still more, combined operation of the belt (41) at this time allows the parts above and below the constriction to be horizontally slid and thereby food having a bird shape can be formed (see Figure 20).

Apart from these, in the bar-shaped food supply unit (A), the sectional shape of the large nozzle (N2) for extruding the bar-shaped food can be replaced with various shapes such as a flower shape or a lozenge shape, thereby, a bar-shaped food having an even greater variety of shapes can be formed.

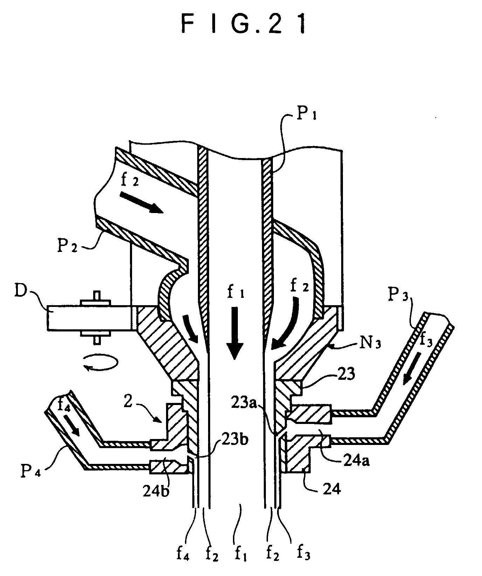

Next, the second embodiment according to the present invention will be described. First referring to Figure 21, there is shown the bar-shaped food supply unit (A).

The bar-shaped food supply unit (A) according to the second embodiment is characterized in that not only a straight stripe pattern but a snaky or spiral pattern can be added on to the surface of the bar-shaped food with core and skin, and such stripe patterns can be formed by two kinds of plastic food materials. In the drawing, arrow (N3) indicates a large rotary nozzle. The large rotary nozzle (N3) is rotatably attached onto the end of the supply passage (P2), and rotated through a nozzle gear (D) driven by a motor (not shown).

A rotation of the large rotary nozzle (N3) imparts a rotary motion to the extruded bar-shaped food by means of friction. In this case, because stripe pattern nozzle device (2), contacting the bottom of the rotary nozzle (N3) through a bearing, is secured against rotation, the bar-shaped food extruded from the rotary nozzle (N3) performs a relative rotation to the food material linearly extruded from the nozzle device (2). Thus, when the rotary nozzle (N3) rotates continuously in one direction, a spiral stripe pattern is formed on the surface of the bar-shaped food. On the other hand, when the rotary nozzle (N3) oscillates back and forth, a snaky stripe pattern is formed on the surface.

The nozzle device (2) according to the second embodiment comprises a first cylindrical part (23) having six nozzle holes (23a, 23a, 23a, 23b, 23b, 23b) on two rows, three nozzle holes on the upper row and three nozzle holes on the lower row, and a second cylindrical part (24) having two corresponding independent passages (24a, 24b). The first cylindrical part (23) is inserted into the second cylindrical part (24) and thereby two annular spaces (passages 24a, 24b) are formed independently. The passage (24a) corresponds to the upper nozzle holes (23a, 23a, 23a) of the first cylindrical part (23), and the passage (24b) corresponds to the lower nozzle holes (23b, 23b, 23b).

Supply passages (P3) and (P4) are respectively connected to the passages (24a) and (24b) of the second cylindrical part (24). The third food material (f3: chocolate) and a fourth food material (f4: marshmallow) are fed into the nozzle device (2) and they are fixed on to the surface of the bar-shaped food with core and skin (core material: first food material f1: soft ice cream, skin material: second food material f2: soft and sticky rice cake). The other parts (for example, extruder) of the bar-shaped food supply unit (A) according to the second embodiment are identical to those of the first embodiment, and thus are not shown.

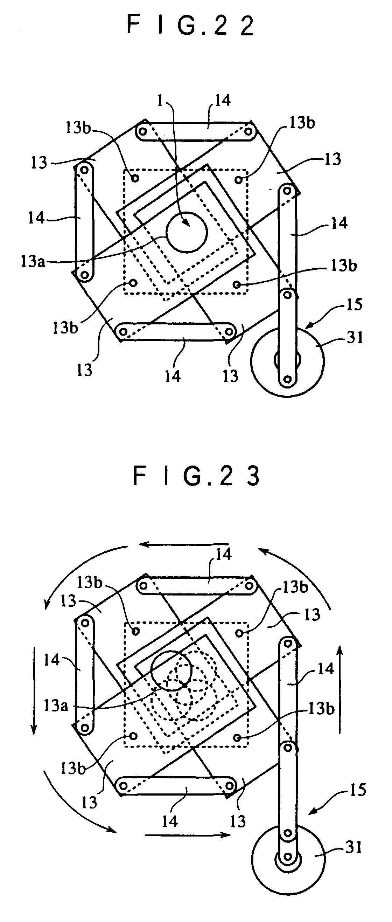

Next, referring to Figures 22 and 23, there is shown bar-shaped food forming unit (B) according to the second embodiment. Figures 22 and 23 only show the forming and cutting area of the food forming unit (B). The other parts such as the belt conveyor are identical to that of the first embodiment, and thus are not shown.

The forming and cutting area (1) according to the second embodiment is defined by four rectangular shutters (13, 13, 13, 13). Each shutter plate is pivotally mounted on a pivot pin (13b) so as to slide over the others. A cutting hole (13a) is respectively bored closer to the edge of an operating side, and the adjacent corners of a driving side are linked together by linking parts (14, 14, 14, 14). One of the link parts (14) is joined to control motor (31) through a crank mechanism (15). By the above structure, each shutter (13) pivots as desired about its respective pivot pin (13b) upon forward and reverse rotation of the control motor (31). As a result, when each cutting hole (13a) formed on each shutter does not overlap with the others, the area (1) shuts (see Figure 22). When each cutting hole (13a) overlaps with the others, the area (1) opens completely (see Figure 23).

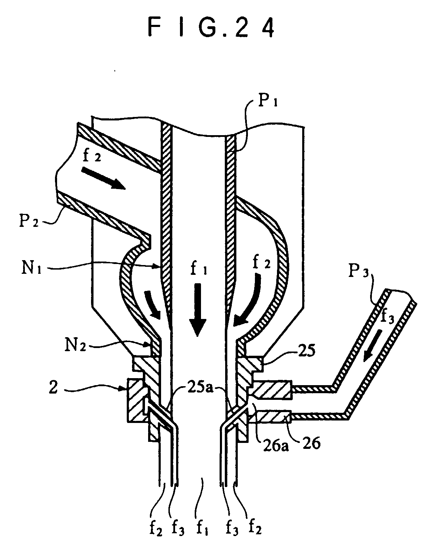

Next, we will explain the first embodiment of the present invention. First, referring to the Figure 24, there is shown bar-shaped food supply unit A.

The bar-shaped food supply unit A according to the present embodiment is characterized by the fact that the attachment of a stripe pattern to the double layered bar-shaped food is done inside the bar-shaped food rather than on the surface of the bar-shaped food. In other words, the stripe pattern made of the third food material (f3: white rice cake) is formed between the first food material (f1: black rice cake) which is, the core material and the second food material (f2: transparent jelly) which is the outer skin material.

The structure of the bar-shaped food supply unit A according to the present embodiment is almost the same as that of the first embodiment. The only difference is that on the inner surface of the cylindrical piece 25, instead of a groove of semi-circular section that extends downward from the nozzle hole, the present embodiment adopts a nozzle pipe (25a) which projects diagonally downward as shown. By this structure, the third food material (f3) pumped out from the supply passage (P3) is directed inside the bar-shaped food between the first food material (f1) which becomes the core and the second food material (f2) which becomes skin, thus forming a stripe pattern.

The apparatus according to the present invention is by no means limited to these first and second embodiments and a variety of changes can be made to their designs. For example, the shape of the shutters can be changed according to the stickiness, flexibility, and other characteristics of the each food material, and also according to the shapes to be formed. The forming and cutting area (1) may be provided in many layers by multiplying the shutter mechanism. Also, the forming and cutting area can be made to perform diagonal movements as well as vertical movements, thereby making possible the production of striped formed food with still more numerous varieties of shapes.

Incidentally, the forming and cutting steps performed by the apparatus of the present invention is not relative to the added stripe patterns of the extruded bar-shaped food. Thus, by stopping the extruder from supplying the plastic food to the stripe pattern nozzle device, shaped food products without stripes can be obtained. Of course, with the stripe pattern nozzle device detached, the apparatus is equally capable of shaping the bar shape food freely.

### INDUSTRIAL APPLICABILITY

As mentioned above, by the apparatus according to the present invention, food having various shapes can be formed even when the food material has a sticky property (for example, soft and sticky rice cake) provided it has a plastic property. Therefore, the apparatus can be utilized to form wide range of food materials such as bread materials as well as soft rice cake or ice cream.

## Claims

1. A method for forming a plastic food having at least one constriction therein, comprising the steps of:
(a) continuously extruding a plastic bar-shaped food material from a nozzle (N1) downwardly onto a belt conveyor (4);
(b) causing said belt conveyer (4) with said bar-shaped food material thereon to move upwardly and downwardly during extrusion of the latter;
(c) forming at least one constriction having the required shape in the surface of the bar-shaped food material introduced into a forming and cutting area (1) interposed between said nozzle (N1) and conveyor (4), by reducing, but not closing, and then opening said forming and cutting area (1) with pivotally mounted multiple shutters (11,13) driven by a control motor (31) capable of controlling the direction, angle, starting and stopping times of pivotal movement of the shutters;
(d) cutting said bar-shaped food material in said forming and cutting area (1) by closing said forming and cutting area (1) completely by means of said shutters (11, 13); and
(e) moving the forming and cutting area (1) upwardly and downwardly during extrusion of the bar-shaped food material.

2. A method as claimed in Claim 1, wherein at least three or more shutters (11) having a shutting contact edge (11a) at one end of the shutter (11) and a cutter blade (11b) extending toward a pivot axis (11c) from the contact edge (11a) are pivotally arranged with the contact edge (11a) of each shutter contacting the cutter blade (11b) of an adjacent shutter (11) thereby to form the forming and cutting area (1).

3. A method as claimed in Claim 1, wherein at least two or more shutters (13) having a cutter hole (13a) in contact with the bar-shaped food material are pivotally overlapped in a contacting condition, thereby to form the forming and cutting area (1).

4. A method as claimed in any one of Claims 1 to 3, wherein during the extruding step, at least one or more types of stripe pattern consisting of plastic food materials are formed on the bar-shaped food material extruded.

5. A method as claimed in any one of Claims 1 to 4, wherein during the extruding step, at least one or more types of stripe pattern consisting of plastic food materials are formed inside the bar-shaped food material extruded.

6. An apparatus adapted and constructed for performing the method of claim 1, said apparatus comprising:
(a) extruding means including a downwardly directed nozzle (N1) for continuously extruding a plastic bar-shaped food material;
(b) a belt conveyor (4) arranged below said extruding means;
(c) means (M1, C2) for moving the belt conveyor (4) upwardly and downwardly between upper and lower positions;
(d) forming and cutting means arranged about a forming and cutting area (1) interposed between said nozzle (N1) and belt conveyor (4), said forming and cutting means comprising symmetrically and pivotally supported multiple shutters (11, 13) reciprocally pivotable between (i) an open position in which the bar-shaped food material can pass therethrough, (ii) a partially closed position in which a restriction is formed in the bar-shaped food material, and (iii) a closed position in which bar-shaped food is cut off from the bar-shaped food material;
(e) control means (31,32,33,34) including a control motor (31) for controlling the direction, angle, and starting and stopping times of pivotal movement of the shutters (11,13); and
(f) means for moving the forming and cutting area (1) upwardly and downwardly during extrusion.

7. An apparatus as claimed in Claim 6, wherein the forming and cutting means includes at least three or more shutters (11) having a contact edge (11a) in a shutting position at the top of shutter and a cutter blade (11b) extending toward a pivot axis (11c) from the contact edge (11a), the shutters (11) being pivotally arranged with the contact edge (11a) of each shutter contacting the cutter blade (11b) of an adjacent shutter (11), thereby to form the forming and cutting area (1).

8. An apparatus as claimed in Claim 6, wherein the forming and cutting means includes at least two or more shutters (13) having a cutter hole in contact with the bar-shaped food, the shutters being pivotally overlapped in a contacting condition, thereby to form the forming and cutting area (1).

9. An apparatus as claimed in any one of Claims 6 to 8, wherein the extruding means comprises a large nozzle (N2) for extruding a first plastic food material and a small nozzle (N1) mounted with clearance inside the large nozzle (N2) for extruding a second plastic food material, thereby to produce a bar-shaped food having a core of said second food material and a skin of said first food material.

10. An apparatus as claimed in any one of Claims 6 to 9, wherein the extruding means includes a large nozzle (N2) for extruding the bar-shaped food material and a nozzle device (2) for a stripe pattern having at least one nozzle hole (21a) for extruding a linear food material toward the bar-shaped food material, the nozzle device (2) being located adjacent an outlet of the large nozzle (N2).

11. An apparatus as claimed in any one of Claims 6 to 10, wherein the extruding means includes a large nozzle (N2) for extruding the bar-shaped food material and a nozzle device (2) for a stripe pattern having at least one nozzle hole (25a) for extruding linear food material inside the bar-shaped food material, the nozzle device (2) being located adjacent an outlet of the large nozzle (N2).

12. An apparatus as claimed in any one of Claims 6 to 11, wherein a large nozzle (N3) for extruding the bar-shaped food material is rotatably mounted and a nozzle device (2) for a stripe pattern is fixed against rotation, the nozzle device (2) being located adjacent the outlet of the large nozzle (N3).

## Patentansprüche

1. Verfahren zur Bildung eines formbaren (plastischen) Lebensmittels, in dem wenigstens eine Einschnürung vorhanden ist, das die folgenden Schritte aufweist:
(a) kontinuierliches Strangpressen eines formbaren, stangenförmigen Lebensmittelmaterials aus einer Düse (N1) nach unten auf ein Förderband (4);
(b) Bewirken der Auf- und Abwärtsbewegung des Förderbandes (4) mit dem darauf befindlichen stangenförmigen Lebensmittelmaterial während des Strangpressens des letzteren:
(c) Bildung von wenigstens einer Einschnürung mit der erforderlichen Form in der Oberfläche des stangenförmigen Lebensmittelmaterials, das in einen Formungs- und Schneidabschnitt (1) eingeführt wird, der zwischen die Düse (N1) und das Fördermittel (4) eingefügt wird, dadurch, daß der Formungs- und Schneidabschnitt (1) verkleinert, aber nicht geschlossen, und dann geöffnet wird, mit Hilfe von schwenkbar angebrachten, mehrfachen Verschlußelementen (11, 13), die durch einen Steilmotor (31) angetrieben werden, der in der Lage ist, die Richtung, den Winkel, die Start- und die Stoppzeiten der Schwenkbewegung der Verschlußelemente zu steuern;
(d) Schneiden des stangenförmigen Lebensmittelmaterials in dem Formungs- und Schneidabschnitt (1) durch vollständiges Schließen des Formungs- und Schneidabschnitts (1) mit Hilfe der Verschlußelemente (11, 13); und
(e) Auf- und Abwärtsbewegung des Formungs- und Schneidabschnitts (1) während des Strangpressens des stangenförmigen Lebensmittelmaterials.

2. Verfahren nach Anspruch 1, worin wenigstens drei oder mehr Verschlußelemente (11), die eine Verschlußkontaktkante (11a) an einem Ende des Verschlußelementes (11) und eine Schneidklinge (11b) haben, die sich von der Kontaktkante (11a) zu einer Drehachse (11c) erstreckt, schwenkbar angeordnet sind, wobei die Kontaktkante (11a) jedes Verschlußelementes die Schneidklinge (11b) eines danebenliegenden Verschlußelementes (11) berührt, um dadurch den Formungs- und Schneidabschnitt (1) zu bilden.

3. Verfahren nach Anspruch 1, worin sich wenigstens zwei oder mehr Verschlußelemente (13), die ein Schneidloch (13a) im Kontakt mit dem stangenförmigen Lebensmittelmaterial haben, in einem kontaktierenden Zustand schwenkbar überdecken, um dadurch den Formungs- und Schneidabschnitt (1) zu bilden.

4. Verfahren nach einem der Ansprüche 1 bis 3, worin während des Schritts des Strangpressens wenigstens ein oder mehrere Typen von Streifenmustern, die aus formbaren Lebensmittelmaterialien bestehen, auf dem stranggepreßten, stangenförmigen Lebensmittelmaterial gebildet werden.

5. Verfahren nach einem der Ansprüche 1 bis 4, worin während des Schritts des Strangpressens wenigstens ein oder mehrere Typen von Streifenmustern, die aus formbaren Lebensmittelmaterialien bestehen, innerhalb des stranggepreßten, stangenförmigen Lebensmittelmaterials gebildet werden.

6. Vorrichtung, die für die Ausführung des Verfahrens von Anspruch 1 geeignet und konstruiert ist, wobei die Vorrichtung folgende Komponenten aufweist:
(a) Strangpreßmittel, einschließlich einer nach unten gerichteten Düse (N1), zum kontinuierlichen Strangpressen eines formbaren, stangenförmigen Lebensmittelmaterials;
(b) ein Förderband (4), das unter den Strangpreßmitteln angeordnet ist;
(c) Mittel (M1, C2) zur Auf- und Abwärtsbewegung des Förderbandes (4) zwischen oberen und unteren Positionen;
(d) Formungs- und Schneidmittel, die um einen Formungs- und Schneidabschnitt (1) angeordnet sind, der zwischen die Düse (N1) und das Förderband (4) eingefügt ist, wobei die Formungs- und Schneidmittel symmetrisch und schwenkbar getragene, mehrfache Verschlußelemente (11, 13) aufweisen, die hin- und hergehend schwenkbar sind zwischen (i) einer offenen Position, in der das stangenförmige Lebensmittelmaterial durch diese passieren kann, (ii) einer teilweise geschlossenen Position, in der in dem stangenförmigen Lebensmittelmaterial eine Einschnürung gebildet wird, und (iii) einer geschlossenen Position, in der das stangenförmige Lebensmittel von dem stangenförmigen Lebensmittelmaterial abgeschnitten wird;
(e) Steuermittel (31, 32, 33, 34), die einen Stellmotor (31) einschließen, zum Steuern der Richtung, des Winkels und der Start- und Stoppzeiten der Schwenkbewegung der Verschlußelemente (11, 13); und
(f) Mittel zur Auf- und Abwärtsbewegung des Formungs- und Schneidabschnitts (1) während des Strangpressens.

7. Vorrichtung nach Anspruch 6, worin die Formungs- und Schneidmittel wenigstens drei oder mehr Verschlußelemente (11) einschließen, die eine Kontaktkante (11a) in einer Verschlußposition an der Oberseite des Verschlußelementes und eine Schneidklinge (11b) haben, die sich von der Kontaktkante (11a) zu einer Drehachse (11c) erstreckt, wobei die Verschlußelemente (11) schwenkbar angeordnet sind, wobei die Kontaktkante (11a) jedes Verschlußelementes die Schneidklinge (11b) eines danebenliegenden Verschlußelementes (11) berührt, um dadurch den Formungs- und Schneidabschnitt (1) zu bilden.

8. Vorrichtung nach Anspruch 6, worin die Formungs- und Schneidmittel wenigstens zwei oder mehr Verschlußelemente (13) einschließen, die ein Schneidloch im Kontakt mit dem stangenförmigen Lebensmittel haben, wobei sich die Verschlußelemente in einem kontaktierenden Zustand schwenkbar überdecken, um dadurch den Formungs- und Schneidabschnitt (1) zu bilden.

9. Vorrichtung nach einem der Ansprüche 6 bis 8, worin die Strangpreßmittel eine große Düse (N2) zum Strangpressen eines ersten formbaren Lebensmittelmaterials und eine kleine Düse (N1), die mit Zwischenraum innerhalb der großen Düse (N2) angeordnet ist, zum Strangpressen eines zweiten formbaren Lebensmittelmaterials umfassen, um dadurch ein stangenförmiges Lebensmittel herzustellen, das einen Kern aus dem zweiten Lebensmittelmaterial und eine Hülle aus dem ersten Lebensmittelmaterial hat.

10. Vorrichtung nach einem der Ansprüche 6 bis 9, worin die Strangpreßmittel eine große Düse (N2) zum Strangpressen des stangenförmigen Lebensmittelmaterials und eine Düseneinrichtung (2) für ein Streifenmuster einschließen, die wenigstens eine Düsenöffnung (21a) zum Strangpressen eines linearen Lebensmittelmaterials hin zu dem stangenförmigen Lebensmittelmaterial hat, wobei sich die Düseneinrichtung (2) angrenzend an den Auslaß der großen Düse (N2) befindet.

11. Vorrichtung nach einem der Ansprüche 6 bis 10, worin die Strangpreßmittel eine große Düse (N2) zum Strangpressen des stangenförmigen Lebensmittelmaterials und eine Düseneinrichtung (2) für ein Streifenmuster einschließen, die wenigstens eine Düsenöffnung (25a) zum Strangpressen eines linearen Lebensmittelmaterials innerhalb des stangenförmigen Lebensmittelmaterials hat, wobei sich die Düseneinrichtung (2) angrenzend an den Auslaß der großen Düse (N2) befindet.

12. Vorrichtung nach einem der Ansprüche 6 bis 11, worin eine große Düse (N3) zum Strangpressen des stangenförmigen Lebensmittelmaterials drehbar angeordnet ist und eine Düseneinrichtung (2) für ein Streifenmuster gegen eine Drehung gesichert ist, wobei sich die Düseneinrichtung (2) angrenzend an den Auslaß der großen Düse (N3) befindet.

## Revendications

1. Procédé de production d'un aliment plastique comportant au moins un étranglement, comprenant les étapes ci-dessous:
(a) extrusion continue d'un matériau alimentaire plastique en forme de barre à partir d'une filière (N1), vers le bas, sur un transporteur à courroie (4);
(b) déplacement vers le haut et vers le bas dudit transporteur à courroie (4), comportant ledit matériau alimentaire en forme de barre qui y est agencé, au cours de l'extrusion de ce dernier;
(c) formation d'au moins un étranglement ayant la forme requise dans la surface du matériau alimentaire en forme de barre, introduit dans une zone de formage et de coupe (1), agencée entre ladite filière (N1) et ledit transporteur (4), en réduisant, mais non pas en fermant ladite zone de formage et de coupe (1), avant de l'ouvrir, par l'intermédiaire de multiples volets montés par pivotement (11, 13), entraînés par un moteur de commande (31) capable d'assurer la commande de la direction, de l'angle, ainsi que des temps de démarrage et d'arrêt du déplacement par pivotement des volets;
(d) découpage dudit matériau alimentaire en forme de barre dans ladite zone de formage et de coupe (1) en fermant complètement ladite zone de formage et de coupe (1) par l'intermédiaire desdits volets (11, 13); et
(e) déplacement de la zone de formage et de coupe (1) vers le haut et vers le bas au cours de l'extrusion du matériau alimentaire en forme de barre.

2. Procédé selon la revendication 1, dans lequel au moins trois volets ou plus (11), comportant un bord de contact de fermeture (11a) au niveau d'une extrémité du volet (11) et une lame de coupe (11) s'étendant vers un axe de pivotement (11c) à partir du bord de contact (11a), sont agencés par pivotement, le bord de contact (11a) de chaque volet contactant la lame de coupe (11b) d'un volet adjacent (11), pour former ainsi la zone de formage et de coupe (1).

3. Procédé selon la revendication 1, dans lequel au moins deux volets ou plus (13), comportant un trou de coupe (13a), en contact avec le matériau alimentaire en forme de barre, se chevauchent par pivotement dans un état de contact, pour former ainsi la zone de formage et de coupe (1).

4. Procédé selon l'une quelconque des revendications 1 à 3, dans lequel, au cours de l'étape d'extrusion, au moins un ou plusieurs types de motifs à bandes, composés de matériaux alimentaires plastiques, sont formés sur le matériau alimentaire en forme de barre extrudé.

5. Procédé selon l'une quelconque des revendications 1 à 4, dans lequel, au cours de l'étape d'extrusion, au moins un ou plusieurs types de motifs à bandes, composés de matériaux alimentaires plastiques, sont formés à l'intérieur du matériau alimentaire en forme de barre extrudé.

6. Dispositif conçu et construit de sorte à exécuter le procédé de la revendication 1, ledit dispositif comprenant:
(a) un moyen d'extrusion englobant une filière (N1) dirigée vers le bas, destinée à extruder en continu un matériau alimentaire plastique en forme de barre:
(b) un transporteur à courroie (4) agencé au-dessous dudit moyen d'extrusion:
(c) un moyen (M1, C2) pour déplacer le transporteur à courroie (4) vers le haut et vers le bas entre des positions supérieure et inférieure;
(d) un moyen de formage et de coupe agencé autour d'une zone de formage et de coupe (1), située entre ladite filière (N1) et ledit transporteur à courroie (4), ledit moyen de formage et de coupe comprenant de multiples volets supportés de manière symétrique et par pivotement (11, 13), pouvant être pivotés vers l'avant et vers l'arrière entre (i) une position ouverte, dans laquelle le matériau alimentaire en forme de barre peut les traverser, (ii) une position partiellement fermée dans laquelle un étranglement est formé dans le matériau alimentaire en forme de barre, et (iii) une position fermée, dans laquelle l'aliment en forme de barre est découpé du matériau alimentaire en forme de barre;
(e) un moyen de commande (31, 32, 33, 34), englobant un moteur de commande (31) pour assurer la commande de la direction, de l'angle, ainsi que des temps de démarrage et d'arrêt du déplacement par pivotement des volets (11, 13); et
(f) un moyen pour déplacer la zone de formage et de coupe (1) vers le haut et vers le bas au cours de l'extrusion.

7. Dispositif selon la revendication 6, dans lequel le moyen de formage et de coupe englobe au moins trois volets ou plus (11), comportant un bord de contact (11a) dans une position de fermeture, en haut du volet, et une lame de coupe (11b), s'étendant vers un axe de pivotement (11c) à partir du bord de contact (11a), les volets (11) étant agencés par pivotement, le bord de contact (11a) de chaque volet contactant la lame de coupe (11b) d'un volet adjacent (11), pour former ainsi la zone de formage et de coupe (1).

8. Dispositif selon la revendication 6, dans lequel le moyen de formage et de coupe englobe au moins deux volets ou plus (13), comportant un trou de coupe en contact avec l'aliment en forme de barre, les volets se chevauchant par pivotement dans un état de contact, pour former ainsi la zone de formage et de coupe (1).

9. Dispositif selon l'une quelconque des revendications 6 à 8, dans lequel le moyen d'extrusion comprend une grande filière (N2) pour extruder un premier matériau alimentaire plastique et une petite filière (N1), montée de façon dégagée à l'intérieur de la grande filière (N2) pour extruder un deuxième matériau alimentaire plastique, pour produire ainsi un aliment en forme de barre comportant un noyau composé dudit deuxième matériau alimentaire et une enveloppe composée dudit premier matériau alimentaire.

10. Dispositif selon l'une quelconque des revendications 6 à 9, dans lequel le moyen d'extrusion englobe une grande filière (N2) pour extruder le matériau alimentaire en forme de barre, et un dispositif à filière (2) pour appliquer un motif à bandes, comportant au moins un trou de filière (21a) pour extruder un matériau alimentaire linéaire en direction du matériau alimentaire en forme de barre, le dispositif à filière (2) étant agencé près d'un orifice de sortie de la grande filière (N2).

11. Dispositif selon l'une quelconque des revendications 6 à 10, dans lequel le moyen d'extrusion englobe une grande filière (N2) pour extruder le matériau alimentaire en forme de barre, et un dispositif à filière (2) pour appliquer un motif à bandes, comportant au moins un trou de filière (25a) pour extruder un matériau alimentaire linéaire à l'intérieur du matériau alimentaire en forme de barre, le dispositif à filière (2) étant agencé près d'un orifice de sortie de la grande filière (N2).

12. Dispositif selon l'une quelconque des revendications 6 à 11, dans lequel une grande filière (N3) pour extruder le matériau alimentaire en forme de barre est montée par rotation, un dispositif à filière (2) pour appliquer un motif à bandes étant fixé contre une rotation, le dispositif à filière (2) étant agencé près de l'orifice de sortie de la grande filière (N3).
